# EUROPEAN PATENT APPLICATION

(11) **EP 4 835 964 A1**
(43) Date of publication of application: **04.11.2026**
(21) Application number: 24912455.3
(22) Date of filing: 13.12.2024
(51) Int. Cl.: H01M 4/02, H01M 4/13, H01M 4/62, H01M 10/04, H01M 10/052, H01M 10/0587, H01M 50/531

(54) **SECONDARY BATTERY**

(30) Priority: 26.12.2023 JP 2023219212
(71) Applicant: Panasonic Intellectual Property Management Co., Ltd., Kadoma-shi, Osaka 571-0057 (JP)
(72) Inventor: YAMAMOTO, Norihisa, Kadoma-shi, Osaka 571-0057 (JP)
(74) Representative: Novagraaf International SA
(86) International application number: PCT/JP2024/044281
(87) International publication number: WO 2025/142566

(57) **Abstract**

This secondary battery is characterized in that: the secondary battery comprises an electrode body (14) in which a positive electrode (11) and a negative electrode (12) are wound with a separator (13) therebetween, a negative electrode current collector plate (17) electrically connected to the negative electrode (12), and an electrolyte solution; the negative electrode (12) includes a belt-like negative electrode core body and a negative electrode mixture layer disposed on the negative electrode core body; the electrode body (14) of the negative electrode core body includes, at one end in the winding axis direction thereof, a negative electrode core body exposed part (44) on which the negative electrode mixture layer is not disposed; the negative electrode core body exposed part (44) is joined to the negative electrode current collector plate (17); the positive electrode (11) includes a belt-like positive electrode core body and a positive electrode mixture layer disposed on the positive electrode core body; the positive electrode mixture layer includes a positive electrode active material and carbon nanotubes; and the carbon nanotubes include at least one of single-walled carbon nanotubes and multi-walled carbon nanotubes.

## Description

### TECHNICAL FIELD

The present disclosure relates to a technique of a secondary battery.

### BACKGROUND

The secondary battery includes, for example, a wound-type electrode assembly in which a separator is disposed between a positive electrode having a positive electrode mixture layer disposed on a positive electrode core and a negative electrode having a negative electrode mixture layer disposed on a negative electrode core, and the positive electrode and the negative electrode are wound in a state of being insulated from each other by the separator.

As a secondary battery including a wound-type electrode assembly, a battery adopting an end-face current collection structure is known from the viewpoint of improving the output of the battery. The end-face current collection structure is, for example, a structure in which exposed portions of electrode cores disposed at both ends of the electrode assembly in the winding axis direction are joined to current collector plates.

When a secondary battery undergoes rapid charging, for example, a large current flows through the negative electrode to generate resistive heat, and the heat is stored in the positive electrode, which has a lower thermal conductivity than the negative electrode. In the case of a secondary battery adopting an end-face current collection structure, since the heat dissipation function by thermal convection of the electrolytic solution is low, if heat is stored in the positive electrode, the electrolytic solution is deteriorated by the heat. As a result, there is a problem that rapid charging characteristics deteriorate.

Conventionally, as techniques for improving the heat dissipation property of a battery adopting an end-face current collection structure, there have been known, for example, a technique for providing a cut in an exposed portion of an electrode core joined to a current collector plate (for example, Patent Literature 1) and a technique for attaching a heat dissipation tape to an uncoated portion on the innermost peripheral side of the positive electrode (for example, Patent Literature 2). However, since both techniques are insufficient for improving the heat dissipation property of the positive electrode, there is room for improvement in the rapid charging characteristics of the battery.

### CITATION LIST

### PATENT LITERATURES

Patent Literature 1: JP 2000-77054 A
Patent Literature 2: JP 2022-553025 A

### SUMMARY

Therefore, an object of the present disclosure is to provide a secondary battery having excellent rapid charging characteristics.

A secondary battery according to one aspect of the present disclosure includes an electrode assembly in which a positive electrode and a negative electrode are wound with a separator interposed therebetween, a negative electrode current collector plate electrically connected to the negative electrode, and an electrolytic solution, in which the negative electrode has a strip-shaped negative electrode core and a negative electrode mixture layer disposed on the negative electrode core, one end of the electrode assembly in a winding axis direction in the negative electrode core is provided with a negative electrode core exposed portion in which the negative electrode mixture layer is not disposed, and the negative electrode core exposed portion is joined to the negative electrode current collector plate, the positive electrode has a strip-shaped positive electrode core and a positive electrode mixture layer disposed on the positive electrode core, and the positive electrode mixture layer contains a positive electrode active material and a carbon nanotube, and the carbon nanotube includes at least one of a single-walled carbon nanotube and a multi-walled carbon nanotube.

Further, a secondary battery according to one aspect of the present disclosure includes an electrode assembly in which a positive electrode and a negative electrode are wound with a separator interposed therebetween, a positive electrode current collector plate electrically connected to the positive electrode, and an electrolytic solution, in which the positive electrode has a strip-shaped positive electrode core and a positive electrode mixture layer disposed on the positive electrode core, one end of the electrode assembly in a winding axis direction in the positive electrode core is provided with a positive electrode core exposed portion in which the positive electrode mixture layer is not disposed, and the positive electrode core exposed portion is joined to the positive electrode current collector plate, and the positive electrode mixture layer contains a positive electrode active material and a carbon nanotube, and the carbon nanotube includes at least one of a single-walled carbon nanotube and a multi-walled carbon nanotube.

Further, a secondary battery according to one aspect of the present disclosure includes an electrode assembly in which a positive electrode and a negative electrode are wound with a separator interposed therebetween, a negative electrode current collector plate electrically connected to the negative electrode, a positive electrode current collector plate electrically connected to the positive electrode, and an electrolytic solution, in which the positive electrode has a strip-shaped positive electrode core and a positive electrode mixture layer disposed on the positive electrode core, one end of the electrode assembly in a winding axis direction in the positive electrode core is provided with a positive electrode core exposed portion in which the positive electrode mixture layer is not disposed, and the positive electrode core exposed portion is joined to the positive electrode current collector plate, the negative electrode has a strip-shaped negative electrode core and a negative electrode mixture layer disposed on the negative electrode core, the other end of the electrode assembly in a winding axis direction in the negative electrode core is provided with a negative electrode core exposed portion in which the negative electrode mixture layer is not disposed, and the negative electrode core exposed portion is joined to the negative electrode current collector plate, and the positive electrode mixture layer contains a positive electrode active material and a carbon nanotube, and the carbon nanotube includes at least one of a single-walled carbon nanotube and a multi-walled carbon nanotube.

According to one aspect of the present disclosure, a secondary battery having excellent rapid charging characteristics can be provided.

### BRIEF DESCRIPTION OF DRAWINGS

FIG. 1 is a cross-sectional view showing an example of a configuration of a secondary battery according to an embodiment.
FIG. 2 is a perspective view showing an example of a configuration of a wound-type electrode assembly.

### DESCRIPTION OF EMBODIMENTS

The drawings referred to in the following description of an embodiment are schematically shown, and dimensional ratios and the like of components drawn in the drawings may be different from real ones.

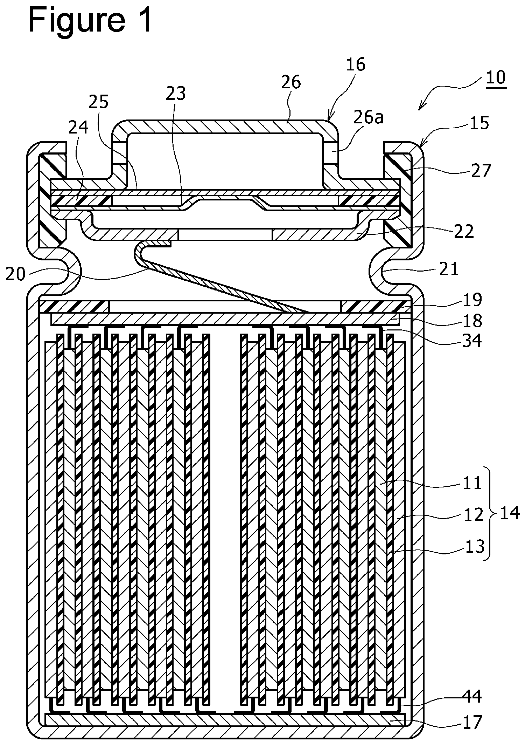

FIG. 1 is a cross-sectional view showing an example of a configuration of a secondary battery according to an embodiment. The secondary battery 10 shown in FIG. 1 includes a wound-type electrode assembly 14, an electrolytic solution (not shown), an outer can 15 that houses the electrode assembly 14, the electrolytic solution, and the like, and a sealing assembly 16 that closes the opening of the outer can 15. Hereinafter, for convenience of description, a side toward the sealing assembly 16 will be described as "upper", and a side toward a bottom of the outer can 15 will be described as "lower".

The electrolytic solution has, for example, lithium ion conductivity. The electrolytic solution contains, for example, a non-aqueous solvent and an electrolyte salt dissolved in the non-aqueous solvent. Examples of the non-aqueous solvent include esters, ethers, nitriles, amides, and mixed solvents of two or more thereof. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product (for example, fluoroethylene carbonate or the like) in which at least a part of hydrogen in these solvents is substituted with a halogen atom such as fluorine. As the electrolyte salt, for example, a lithium salt such as LiPF₆ is used.

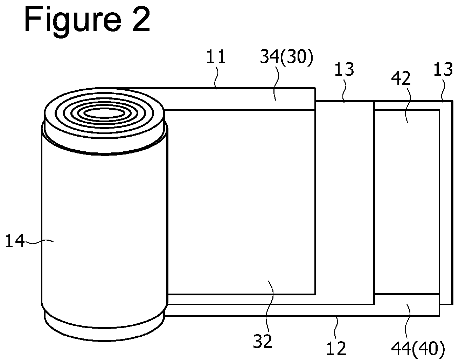

FIG. 2 is a perspective view showing an example of a configuration of a wound-type electrode assembly. In FIG. 2, in order to describe the configuration of the wound-type electrode assembly, ends of members constituting the electrode assembly are shown in a developed state. As shown in FIGS. 1 and 2, the electrode assembly 14 is a wound-type electrode assembly which includes a positive electrode 11, a negative electrode 12, and a separator 13 disposed between the positive electrode 11 and the negative electrode 12, and in which the positive electrode 11 and the negative electrode 12 are wound with the separator 13 interposed therebetween.

As shown in FIG. 2, the positive electrode 11 includes a strip-shaped positive electrode core 30 and a positive electrode mixture layer 32 disposed on both surfaces of the positive electrode core 30. At the upper end of the electrode assembly 14 in the winding axis direction in the positive electrode core 30, the positive electrode mixture layer 32 is not disposed, and a positive electrode core exposed portion 34 in which the positive electrode core 30 is exposed is provided. The positive electrode core exposed portion 34 is provided, for example, from one end to the other end in the longitudinal direction of the positive electrode core 30. The negative electrode 12 has a strip-shaped negative electrode core 40 and a negative electrode mixture layer 42 that is disposed on both surfaces of the negative electrode core 40. At the lower end of the electrode assembly 14 in the winding axis direction in the negative electrode core 40, the negative electrode mixture layer 42 is not disposed, and a negative electrode core exposed portion 44 in which the negative electrode core 40 is exposed is provided. The negative electrode core exposed portion 44 is provided, for example, from one end to the other end in the longitudinal direction of the negative electrode core 40. That is, in the electrode assembly 14 shown in FIG. 2, the upper end of the electrode assembly 14 in the winding axis direction is formed of the positive electrode core exposed portion 34, and the lower end of the electrode assembly 14 in the winding axis direction is formed of the negative electrode core exposed portion 44. The width of the positive electrode core exposed portion 34 (the length of the electrode assembly 14 in the winding axis direction) is, for example, greater than or equal to 2 mm and less than or equal to 20 mm. Further, the width of the negative electrode core exposed portion 44 (the length of the electrode assembly 14 in the winding axis direction) is, for example, greater than or equal to 2 mm and less than or equal to 20 mm.

Examples of the positive electrode core 30 constituting the positive electrode 11 include, a foil of a metal stable in a potential range of the positive electrode 11 such as aluminum or an aluminum alloy, and a film in which the metal is disposed on its surface layer. The thickness of the positive electrode core 30 is, for example, greater than or equal to 10 µm and less than or equal to 50 µm. The positive electrode mixture layer 32 contains a positive electrode active material and a carbon nanotube. The positive electrode mixture layer 32 may contain a conductive agent other than the carbon nanotube, a binder, and the like.

Examples of the positive electrode active material include a lithium-containing metal composite oxide. Examples of the metal element contained in the lithium-containing metal composite oxide include Ni, Co, Mn, Al, B, Mg, Ti, V, Cr, Fe, Cu, Zn, Ga, Sr, Zr, Nb, In, Sn, Ta, and W. An example of a preferred lithium-containing metal composite oxide is a composite oxide containing at least one of Ni, Co, Mn, and Al.

The carbon nanotube includes at least one of a single-walled carbon nanotube and a multi-walled carbon nanotube. When the positive electrode mixture layer 32 contains a carbon nanotube having a high thermal conductivity, the heat dissipation property of the positive electrode mixture layer 32 and thus the heat dissipation property of the positive electrode 11 can be enhanced. From the viewpoint of enhancing the heat dissipation property of the positive electrode mixture layer 32, the carbon nanotube preferably includes a single-walled carbon nanotube and a multi-walled carbon nanotube.

A single-walled carbon nanotube (SWCNT) is a carbon nanostructure in which a single layer of graphene sheet constitutes one cylindrical shape, and a multi-walled carbon nanotube (MWCNT) is a carbon nanostructure in which two or more layers of graphene sheets are concentrically stacked to constitute one cylindrical shape. The graphene sheet refers to a layer in which a carbon atom in an sp2 hybrid orbital forming a crystal of graphite is located at an apex of a regular hexagon. The shape of the carbon nanotube is not limited. Examples of the shape include various forms including needle shapes, cylindrical tube shapes, fishbone shapes (fishbone or cup-stacked type), trump shapes (platelets), and coil shapes.

The fiber length of each of the single-walled carbon nanotube and the multi-walled carbon nanotube may be, for example, greater than or equal to 500 nm and less than or equal to 200 µm, and may be greater than or equal to 1 µm and less than or equal to 100 µm. The fiber length of the carbon nanotube can be determined by measuring the lengths of 50 arbitrary carbon nanotubes with a field-emission scanning electron microscope (FE-SEM) and arithmetically averaging the lengths.

The outermost peripheral diameters (that is, fiber diameters) of the single-walled carbon nanotube and the multi-walled carbon nanotube may each be, for example, greater than or equal to 0.5 nm or more and less than or equal to 20 nm, and may be greater than or equal to 1 nm and less than or equal to 10 nm. The outermost peripheral diameter of the carbon nanotube can be determined by measuring the outer diameters of 50 arbitrary carbon nanotubes with a field-emission scanning electron microscope (FE-SEM) or a transmission electron microscope (TEM) and arithmetically averaging the outer diameters.

The multi-walled carbon nanotube contained in the positive electrode mixture layer 32 preferably includes a multi-walled carbon nanotube having a BET specific surface area greater than or equal to 200 m²/g. Further, the single-walled carbon nanotube contained in the positive electrode mixture layer 32 preferably includes a single-walled carbon nanotube having a BET specific surface area greater than or equal to 300 m²/g. Since the carbon nanotube satisfying the surface area has a high thermal conductivity, the incorporation of the carbon nanotube satisfying the surface area in the positive electrode mixture layer 32 can further improve the heat dissipation property of the positive electrode mixture layer 32. The upper limit of the BET specific surface area of the multi-walled carbon nanotube may be, for example, less than or equal to 500 m²/g. The upper limit of the BET specific surface area of the single-walled carbon nanotube may be, for example, less than or equal to 600 m²/g. The specific surface area of the carbon nanotube is determined by the BET method, which is a general method for measuring a specific surface area, using a specific surface area measuring apparatus by a gas adsorption method.

The content of the multi-walled carbon nanotube contained in the positive electrode mixture layer 32 is, for example, preferably greater than or equal to 0.01 parts by mass and less than or equal to 0.5 parts by mass, and more preferably greater than or equal to 0.05 parts by mass and less than or equal to 0.1 parts by mass with respect to 100 parts by mass of the positive electrode active material from the viewpoint of further improving the heat dissipation property of the positive electrode mixture layer 32. Further, the content of the single-walled carbon nanotube contained in the positive electrode mixture layer 32 is, for example, preferably greater than or equal to 0.0001 parts by mass and less than or equal to 0.02 parts by mass, and more preferably greater than or equal to 0.001 parts by mass and less than or equal to 0.01 parts by mass with respect to 100 parts by mass of the positive electrode active material from the viewpoint of further improving the heat dissipation property of the positive electrode mixture layer 32.

The single-walled carbon nanotube (SWCNT) and the multi-walled carbon nanotube (MWCNT) preferably substantially contain no metal catalyst in the tube. In general, a carbon nanotube is synthesized using a metal catalyst. However, if a metal catalyst remains in the carbon nanotube, the metal catalyst may cause deterioration of the positive electrode 11, and the characteristics of the secondary battery may deteriorate. Therefore, the carbon nanotube is preferably washed with, for example, an acidic aqueous solution to remove the metal catalyst. Here, the phrase "substantially contain no metal catalyst" means that a metal catalyst is contained only at or below the lower detection limit by ICP-AES.

The positive electrode mixture layer 32 may contain a particulate conductive agent in addition to the carbon nanotube. Examples of the particulate conductive agent include carbon blacks such as acetylene black and Ketjenblack, and carbon materials such as graphite. The content of the particulate conductive agent may be, for example, in a range greater than or equal to 1 part by mass and less than or equal to 5 parts by mass with respect to 100 parts by mass of the positive electrode active material.

Examples of the binder include fluororesins such as polytetrafluoroethylene (PTFE) and polyvinylidene fluoride (PVDF), polyacrylonitrile (PAN), a polyimide resin, an acrylic resin, a polyolefin resin, a styrene-butadiene copolymer (SBR), carboxymethyl cellulose (CMC), polyacrylic acid (PAA), and polyethylene oxide (PEO). The content of the binder may be, for example, in a range greater than or equal to 0.1 mass% and less than or equal to 5 mass% with respect to the total mass of the positive electrode mixture layer 32.

The positive electrode 11 can be prepared by applying a positive electrode mixture slurry containing a positive electrode active material, a carbon nanotube, and the like onto the positive electrode core 30, drying a coating film, followed by rolling to form the positive electrode mixture layer 32 on the positive electrode core 30. From the viewpoint of improving the dispersibility of the carbon nanotube, it is preferable to add at least one of a hydrogenated nitrile-butadiene copolymer (HNBR) and a cellulose derivative to the positive electrode mixture slurry. That is, by the incorporation of a hydrogenated nitrile-butadiene copolymer and a cellulose derivative in the positive electrode mixture layer 32, the carbon nanotube in the positive electrode mixture layer 32 is maintained in a highly dispersed state, so that the heat dissipation property of the positive electrode mixture layer 32 can be further improved. The positive electrode mixture layer 32 may be formed only on one surface or on both surfaces of the positive electrode core 30. The thickness of the positive electrode mixture layer 32 is, for example, greater than or equal to 10 µm and less than or equal to 150 µm on one side of the positive electrode core 30.

The negative electrode 12 has a negative electrode core 40 and a negative electrode mixture layer 42 formed on both surfaces of the negative electrode core 40. Examples of the negative electrode core include a foil of a metal stable in a potential range of the negative electrode 12 such as copper or a copper alloy, and a film in which the metal is disposed on a surface layer. The thickness of the negative electrode core 40 is, for example, greater than or equal to 5 µm and less than or equal to 50 µm. The negative electrode mixture layer 42 contains, for example, a negative electrode active material, a binder, and the like. The negative electrode 12 can be prepared, for example, by applying a negative electrode mixture slurry containing a negative electrode active material and the like onto the negative electrode core 40, drying a coating film, followed by compression to form the negative electrode mixture layer 42 on the negative electrode core 40. The negative electrode mixture layer 42 may be formed only on one surface or on both surfaces of the negative electrode core 40. The thickness of the negative electrode mixture layer 42 is, for example, greater than or equal to 10 µm and less than or equal to 150 µm on one side of the negative electrode core 40.

As the negative electrode active material, a carbon material that reversibly occludes and releases lithium ions is generally used. Examples of the carbon material include natural graphite such as scale-like graphite, massive graphite, and earthy graphite, and artificial graphite such as massive artificial graphite and graphitized mesophase carbon microbeads. Examples of the negative electrode active material include metals alloyed with lithium such as Si and Sn, alloys containing the metals, and compounds containing the metals in addition to the carbon material. Examples of the binder include materials similar to those for the positive electrode 11. The negative electrode mixture layer 42 may contain a conductive agent.

As the separator 13, for example, a porous sheet having ion permeability and insulating properties is used. Specific examples of the porous sheet include a microporous thin film, a woven fabric, and a nonwoven fabric. The material of the separator 13 is preferably a polyolefin resin such as polyethylene or polypropylene, cellulose, or the like. The separator 13 may have either a single layer structure or a laminated structure. On the surface of the separator 13, a heat-resistant layer or the like may be formed.

The secondary battery 10 shown in FIG. 1 has a negative electrode current collector plate 17 disposed below the electrode assembly 14. The negative electrode current collector plate 17 is, for example, a metal plate formed of nickel, a nickel alloy, or the like. The negative electrode core exposed portion 44 at the lower end of the electrode assembly 14 is joined to the negative electrode current collector plate 17 by welding or the like. The negative electrode current collector plate 17 is joined to an inner surface of a bottom plate of the outer can 15 by welding or the like. That is, the negative electrode core exposed portion 44 is electrically connected to the outer can 15 via the negative electrode current collector plate 17, and the outer can 15 serves as a negative electrode terminal.

The outer can 15 is, for example, a bottomed cylindrical metal container. A gasket 27 is provided between the outer can 15 and the sealing assembly 16 to ensure the sealability of the inside of the battery. The outer can 15 has, for example, a groove portion 21 which supports the sealing assembly 16 and in which a part of a side surface portion protrudes inward. The groove portion 21 is preferably formed in an annular shape along the circumferential direction of the outer can 15, and supports the sealing assembly 16 on its upper surface.

The sealing assembly 16 shown in FIG. 1 has a structure in which a filter 22, a lower vent member 23, an insulating member 24, an upper vent member 25, and a cap 26 are stacked sequentially from the electrode assembly 14 side. Each of the members forming the sealing assembly 16 has, for example, a disk shape or a ring shape, and the members excluding the insulating member 24 are electrically connected to each other. The lower vent member 23 and the upper vent member 25 are connected to each other at their central portions, and the insulating member 24 is interposed between peripheral edges of the lower vent member 23 and the upper vent member 25. When the internal pressure of the secondary battery 10 increases due to heat generated by an internal short circuit or the like, for example, the lower vent member 23 deforms so as to push the upper vent member 25 up toward the cap 26 side and breaks, so that a current path between the lower vent member 23 and the upper vent member 25 is cut off. When the internal pressure further increases, the upper vent member 25 ruptures, and gas is discharged from a through hole 26a of the cap 26.

The secondary battery 10 shown in FIG. 1 includes a positive electrode current collector plate 18 disposed above the electrode assembly 14, an annular insulating plate 19 disposed on the positive electrode current collector plate 18, and a connection lead 20. The positive electrode current collector plate 18 is, for example, a metal plate formed of aluminum, an aluminum alloy, or the like. The connection lead 20 is, for example, a metal member of aluminum, an aluminum alloy, or the like. The positive electrode core exposed portion 34 at the upper end of the electrode assembly 14 is joined to the positive electrode current collector plate 18 by welding or the like. The lower end of the connection lead 20 is joined to the upper surface of the positive electrode current collector plate 18 by welding or the like. The connection lead 20 extends toward the sealing assembly 16 through a through hole of the insulating plate 19, and the upper end of the connection lead 20 is joined to the lower surface of the filter 22 of the sealing assembly 16 by welding or the like. The positive electrode core exposed portion 34 is electrically connected to the filter 22 via the positive electrode current collector plate 18 and the connection lead 20. That is, the cap 26 electrically connected to the filter 22 serves as a positive electrode terminal.

In the secondary battery 10 shown in FIG. 1, in both the positive electrode 11 and the negative electrode 12, an end-face current collection structure in which a core exposed portion located at an end of the electrode assembly 14 in the winding axis direction is joined to a current collector plate, and current is directly collected from the core is adopted. However, in the secondary battery of the present embodiment, one of the positive electrode and the negative electrode may adopt an end-face current collection structure, while the other electrode may adopt a structure in which an electrode lead is connected to the other electrode and current is collected via the electrode lead instead of an end-face current collection structure.

As described above, heat generated in the electrode by rapid charging and discharging is easily stored in the positive electrode having a lower thermal conductivity than the negative electrode. One reason for this is considered to be that an oxide having a low thermal conduction property is used for the positive electrode active material contained in the positive electrode mixture layer. In addition, in the case of a secondary battery in which an end-face current collection structure is adopted in at least one of the positive electrode and the negative electrode, since the heat dissipation function by thermal convection of the electrolytic solution is low, if heat is stored in the positive electrode, the electrolytic solution is deteriorated by the heat. However, in the present embodiment, since the carbon nanotube is added to the positive electrode mixture layer to increase the heat dissipation property of the positive electrode mixture layer, heat is less likely to be retained in the positive electrode. Therefore, in the present embodiment, in the secondary battery adopting the end-face current collection structure, even when rapid charging is performed, deterioration of the electrolytic solution is suppressed, so that a battery having excellent rapid charging characteristics is obtained.

In particular, in the case of a secondary battery in which the electrode plate lengths of the positive electrode and the negative electrode (the lengths of the electrodes in the longitudinal direction) are greater than or equal to 3000 mm, heat is likely to be retained in the positive electrode by rapid charging, and the rapid charging characteristics are remarkably deteriorated. However, as in the present embodiment, by adding the carbon nanotube to the positive electrode mixture layer, even in the case of a secondary battery in which the electrode plate lengths of the positive electrode and the negative electrode are greater than or equal to 3000 mm, the rapid charging characteristics are improved.

### EXAMPLES

The present disclosure will be further described below with reference to Examples. However, the present disclosure is not limited to these Examples.

### <Example 1>

### [Preparation of Positive Electrode]

A positive electrode mixture slurry was prepared by mixing 100 parts by mass of a positive electrode active material, 0.4 parts by mass of a multi-walled carbon nanotube (MWCNT, BET specific surface area: 400 m²/g), and 0.9 parts by mass of polyvinylidene fluoride (PVDF), and adding an appropriate amount of N-methyl-2-pyrrolidone (NMP) thereto. As the positive electrode active material, aluminum-containing lithium nickel cobalt oxide represented by LiNi_{0.88}Co_{0.09}Al_{0.03}O₂ was used. Next, the positive electrode mixture slurry was applied to both surfaces of the aluminum foil so as to form the above-mentioned positive electrode core exposed portion. This coating film was dried, rolled, and cut into a predetermined electrode plate size to prepare a positive electrode in which a positive electrode mixture layer was formed on both surfaces of a positive electrode core. The positive electrode has an electrode plate length (length in the longitudinal direction) of 3000 mm.

### [Preparation of Negative Electrode]

A negative electrode mixture slurry was prepared by mixing 95 parts by mass of graphite, 5 parts by mass of Si oxide (SiO), 1 part by mass of sodium carboxymethylcellulose (CMC-Na), and 1 part by mass of styrene-butadiene rubber (SBR), and adding an appropriate amount of water thereto. Next, the negative electrode mixture slurry was applied to both surfaces of the copper foil so as to form the above-mentioned negative electrode core exposed portion. This coating film was dried, rolled, and cut into a predetermined electrode plate size to prepare a negative electrode in which a negative electrode mixture layer was formed on both surfaces of a negative electrode core. The negative electrode has an electrode plate length (length in the longitudinal direction) of 3300 mm.

### [Preparation of Electrolytic Solution]

An electrolytic solution was prepared by adding 5 parts by mass of vinylene carbonate (VC) to 100 parts by mass of a mixed solvent obtained by mixing ethylene carbonate (EC) and dimethyl carbonate (DMC) at a volume ratio of 3:7, and dissolving lithium hexafluorophosphate (LiPF₆) therein at a concentration of 1.5 mol/liter.

### [Preparation of Test Cell]

A wound-type electrode assembly was prepared by spirally winding the positive electrode and the negative electrode with a microporous polyethylene membrane separator interposed therebetween. A positive electrode current collector plate and a negative electrode current collector plate were disposed above and below this electrode assembly, respectively, and the positive electrode core exposed portion at the upper end and the negative electrode core exposed portion at the lower end of the electrode assembly were bent toward the inner peripheral side and then welded to the positive electrode current collector plate and the negative electrode current collector plate, respectively. Thereafter, the electrode assembly was housed in a bottomed cylindrical outer can, the negative electrode current collector plate was welded to the bottom of the bottomed cylindrical outer can, and the positive electrode current collector plate and the sealing assembly were connected with a connection tab. After a non-aqueous electrolyte was injected into the outer can, the opening of the outer can was sealed with the sealing assembly via a gasket, to prepare a cylindrical test cell.

### <Example 2>

A test cell was prepared in the same manner as in Example 1 except that 0.4 parts by mass of the multi-walled carbon nanotube was replaced with 0.2 parts by mass of the single-walled carbon nanotube (SWCNT) in the preparation of the positive electrode.

### <Example 3>

A test cell was prepared in the same manner as in Example 1 except that 0.4 parts by mass of the multi-walled carbon nanotube was replaced with 0.2 parts by mass of the multi-walled carbon nanotube and 0.01 parts by mass of the single-walled carbon nanotube in the preparation of the positive electrode.

### <Example 4>

A test cell was prepared in the same manner as in Example 1 except that 0.4 parts by mass of the multi-walled carbon nanotube was replaced with 0.01 parts by mass of the multi-walled carbon nanotube and 0.001 parts by mass of the single-walled carbon nanotube in the preparation of the positive electrode.

### <Example 5>

A test cell was prepared in the same manner as in Example 1 except that 0.4 parts by mass of the multi-walled carbon nanotube was replaced with 0.5 parts by mass of the multi-walled carbon nanotube and 0.02 parts by mass of the single-walled carbon nanotube in the preparation of the positive electrode.

### <Example 6>

A test cell was prepared in the same manner as in Example 1 except that 0.4 parts by mass of the multi-walled carbon nanotube was replaced with 0.2 parts by mass of the multi-walled carbon nanotube and 0.01 parts by mass of the single-walled carbon nanotube, and a hydrogenated nitrile-butadiene copolymer (HNBR) was added at 1% to the positive electrode mixture slurry in the preparation of the positive electrode.

### <Example 7>

A test cell was prepared in the same manner as in Example 1 except that 0.4 parts by mass of the multi-walled carbon nanotube was replaced with 0.2 parts by mass of the multi-walled carbon nanotube and 0.01 parts by mass of the single-walled carbon nanotube in the preparation of the positive electrode, and the electrode plate length of the positive electrode was set to 800 mm, and the electrode plate length of the negative electrode was set to 880 mm.

### <Comparative Example 1>

A test cell was prepared in the same manner as in Example 1 except that 0.4 parts by mass of the multi-walled carbon nanotube was replaced with 1 part by mass of carbon black (CB) in the preparation of the positive electrode.

### <Comparative Example 2>

A test cell was prepared in the same manner as in Example 1 except that 0.4 parts by mass of the multi-walled carbon nanotube was replaced with 1 part by mass of carbon black (CB) in the preparation of the positive electrode, and the positive electrode and the negative electrode were changed from the end-face current collection structure to a tab structure. The tab structure is as follows. A positive electrode core exposed portion was formed at the longitudinal center of the positive electrode, and a positive electrode tab was joined to the positive electrode core exposed portion. A negative electrode core exposed portion was formed at one longitudinal end of the negative electrode, and a negative electrode tab was joined to the negative electrode core exposed portion. A wound-type electrode having these positive and negative electrodes was housed in a bottomed cylindrical outer can, the negative electrode tab was welded to the bottom of the bottomed cylindrical outer can, and the positive electrode tab was joined to a sealing assembly. After a non-aqueous electrolyte was injected into the outer can, the opening of the outer can was sealed with the sealing assembly via a gasket, to prepare a cylindrical test cell.

### <Comparative Example 3>

A test cell was prepared in the same manner as in Comparative Example 2 except that 1 part by mass of carbon black was replaced with 0.4 parts by mass of the multi-walled carbon nanotube in the preparation of the positive electrode.

### <Comparative Example 4>

A test cell was prepared in the same manner as in Comparative Example 2 except that 1 part by mass of carbon black was replaced with 0.02 parts by mass of the single-walled carbon nanotube in the preparation of the positive electrode.

### <Comparative Example 5>

A test cell was prepared in the same manner as in Comparative Example 2 except that 1 part by mass of carbon black was replaced with 0.2 parts by mass of the multi-walled carbon nanotube and 0.01 parts by mass of the single-walled carbon nanotube in the preparation of the positive electrode.

### <Comparative Example 6>

A test cell was prepared in the same manner as in Example 1 except that 0.4 parts by mass of the multi-walled carbon nanotube was replaced with 1 part by mass of carbon black in the preparation of the positive electrode, and the electrode plate length of the positive electrode was set to 800 mm, and the electrode plate length of the negative electrode was set to 880 mm.

### [Measurement of Initial Resistance]

In an environment of 25°C, each of the test cells of Examples and Comparative Examples was subjected to constant current charging at 0.1C until the battery voltage reached 4.2 V, followed by constant voltage charging at 4.2 V until the current value reached 0.05 mA. After a rest period of 10 minutes, the test cell was discharged to 2.5 V at 0.1C. Furthermore, after charging the test cell under the above-mentioned charging conditions, AC impedance measurement was performed in the range of 10 mHz to 100 kHz, and a Cole-Cole plot was prepared. The resistance was determined from the size of the substantially semicircular arc appearing in the obtained Cole-Cole plot, and this value was defined as the initial resistance. The results are shown in Table 1. As for the initial resistances shown in Table 1, the initial resistance of Comparative Example 2 was taken as a reference (100), and the other initial resistances are expressed relatively.

### [Measurement of Resistance after Rapid Charging Test]

In an environment of 25°C, each of the test cells of Examples and Comparative Examples was subjected to constant current charging at 2C until the battery voltage reached 4.2 V, followed by constant current discharging to 2.5 V at 0.5C. This charging and discharging operation was defined as one cycle, and 800 cycles were performed. Furthermore, each test cell was subjected to constant current charging at 0.1C until the battery voltage reached 4.2 V, followed by constant voltage charging at 4.2 V until the current value reached 0.05 mA. The above-mentioned impedance measurement was performed on the test cell in this charged state, and the resistance was determined from the size of the substantially semicircular arc appearing in the obtained Cole-Cole plot, and this value was defined as the resistance after the rapid charging test. The results are shown in Table 1. However, as for the resistances after the rapid charging test shown in Table 1, the initial resistance of Comparative Example 2 was taken as a reference (100), and the resistance after the rapid charging test of each of Examples and Comparative Examples is expressed relatively.

In addition, a thermocouple was attached to the side surface of the outer can of each test cell, the temperature of each test cell was measured during the above-mentioned rapid charging test, and the maximum temperature of each test cell during the rapid charging test is summarized in Table 1.

**[Table 1]**

| | Electrode plate length (mm) | Current collection structure | Conductive agent | | Dispersant | Evaluation | | |
|---|---|---|---|---|---|---|---|---|
| | | | Type | Content (parts by mass) | | Battery temperature during rapid charging (°C) | Initial resistance | Resistance after rapid charging test |
| Example 1 | 3000 | End-face current collection | MWCNT | 0.40 | - | 37 | 75 | 130 |
| Example 2 | 3000 | End-face current collection | SWCNT | 0.02 | - | 35 | 70 | 129 |
| Example 3 | 3000 | End-face current collection | MWCNT/ SWCNT | 0.20/ 0.01 | - | 32 | 65 | 110 |
| Example 4 | 3000 | End-face current collection | MWCNT/ SWCNT | 0.01/ 0.001 | - | 34 | 72 | 120 |
| Example 5 | 3000 | End-face current collection | MWCNT/ SWCNT | 0.5/ 0.02 | - | 33 | 75 | 124 |
| Example 6 | 3000 | End-face current collection | MWCNT/ SWCNT | 0.20/ 0.01 | HNBR (0.01%) | 30 | 65 | 107 |
| Example 7 | 800 | End-face current collection | MWCNT/ SWCNT | 0.20/ 0.01 | - | 42 | 75 | 134 |
| Comparative Example 1 | 3000 | End-face current collection | CB | 1.00 | - | 45 | 80 | 303 |
| Comparative Example 2 | 3000 | Tab structure | CB | 1.00 | - | 50 | 100 | 280 |
| Comparative Example 3 | 3000 | Tab structure | MWCNT | 0.40 | - | 52 | 99 | 280 |
| Comparative Example 4 | 3000 | Tab structure | SWCNT | 0.02 | - | 52 | 97 | 279 |
| Comparative Example 5 | 3000 | Tab structure | MWCNT/ SWCNT | 0.20/ 0.01 | - | 53 | 95 | 279 |
| Comparative Example 6 | 800 | End-face current collection | CB | 1.00 | - | 45 | 80 | 302 |

As can be seen from Table 1, the resistances after the rapid charging test of Examples 1 to 7 were reduced to significantly lower values than the resistances after the rapid charging test of Comparative Examples 1 to 6. It should also be noted that the battery temperatures during the rapid charging test were also lower in Examples 1 to 7 than in Comparative Examples 1 to 6. From these results, it can be said that, in a secondary battery adopting an end-face current collection structure in which the core exposed portions are joined to the current collector plates, excellent rapid charging characteristics can be obtained by incorporating the carbon nanotube in the positive electrode mixture layer constituting the positive electrode.

Furthermore, in Examples 3 to 6, in which the positive electrode mixture layer contains both the single-walled carbon nanotube and the multi-walled carbon nanotube among Examples, the resistance after the rapid charging test could be reduced as compared to Examples 1 and 2, in which the positive electrode mixture layer contains one of the single-walled carbon nanotube and the multi-walled carbon nanotube. Moreover, in Example 6, in which the positive electrode mixture layer contains HNBR as a dispersant, among Examples 3 to 6, the resistance after the rapid charging test could be reduced as compared to the other Examples.

The present disclosure is further described by the following embodiments.

### Configuration 1:

A secondary battery including an electrode assembly in which a positive electrode and a negative electrode are wound with a separator interposed therebetween, a negative electrode current collector plate electrically connected to the negative electrode, and an electrolytic solution, in which
the negative electrode has a strip-shaped negative electrode core and a negative electrode mixture layer disposed on the negative electrode core,
one end of the electrode assembly in a winding axis direction in the negative electrode core is provided with a negative electrode core exposed portion in which the negative electrode mixture layer is not disposed, and the negative electrode core exposed portion is joined to the negative electrode current collector plate,
the positive electrode has a strip-shaped positive electrode core and a positive electrode mixture layer disposed on the positive electrode core, and
the positive electrode mixture layer contains a positive electrode active material and a carbon nanotube, and the carbon nanotube includes at least one of a single-walled carbon nanotube and a multi-walled carbon nanotube.

### Configuration 2:

A secondary battery including an electrode assembly in which a positive electrode and a negative electrode are wound with a separator interposed therebetween, a positive electrode current collector plate electrically connected to the positive electrode, and an electrolytic solution, in which
the positive electrode has a strip-shaped positive electrode core and a positive electrode mixture layer disposed on the positive electrode core,
one end of the electrode assembly in a winding axis direction in the positive electrode core is provided with a positive electrode core exposed portion in which the positive electrode mixture layer is not disposed, and the positive electrode core exposed portion is joined to the positive electrode current collector plate, and
the positive electrode mixture layer contains a positive electrode active material and a carbon nanotube, and the carbon nanotube includes at least one of a single-walled carbon nanotube and a multi-walled carbon nanotube.

### Configuration 3:

A secondary battery including an electrode assembly in which a positive electrode and a negative electrode are wound with a separator interposed therebetween, a negative electrode current collector plate electrically connected to the negative electrode, a positive electrode current collector plate electrically connected to the positive electrode, and an electrolytic solution, in which
the positive electrode has a strip-shaped positive electrode core and a positive electrode mixture layer disposed on the positive electrode core,
one end of the electrode assembly in a winding axis direction in the positive electrode core is provided with a positive electrode core exposed portion in which the positive electrode mixture layer is not disposed, and the positive electrode core exposed portion is joined to the positive electrode current collector plate,
the negative electrode has a strip-shaped negative electrode core and a negative electrode mixture layer disposed on the negative electrode core,
the other end of the electrode assembly in a winding axis direction in the negative electrode core is provided with a negative electrode core exposed portion in which the negative electrode mixture layer is not disposed, and the negative electrode core exposed portion is joined to the negative electrode current collector plate, and
the positive electrode mixture layer contains a positive electrode active material and a carbon nanotube, and the carbon nanotube includes at least one of a single-walled carbon nanotube and a multi-walled carbon nanotube.

### Configuration 4:

The secondary battery according to any one of configurations 1 to 3, in which the carbon nanotube includes a single-walled carbon nanotube and a multi-walled carbon nanotube.

### Configuration 5:

The secondary battery according to any one of configurations 1 to 4, in which a content of the single-walled carbon nanotube is greater than or equal to 0.0001 parts by mass and less than or equal to 0.02 parts by mass with respect to 100 parts by mass of the positive electrode active material.

### Configuration 6:

The secondary battery according to any one of configurations 1 to 5, in which a content of the multi-walled carbon nanotube is greater than or equal to 0.01 parts by mass and less than or equal to 0.5 parts by mass with respect to 100 parts by mass of the positive electrode active material.

### Configuration 7:

The secondary battery according to any one of configurations 1 to 6, in which the positive electrode mixture layer contains at least one of a hydrogenated nitrile-butadiene copolymer (HNBR) and a cellulose derivative.

### Configuration 8:

The secondary battery according to any one of configurations 1 to 7, in which the single-walled carbon nanotube includes a single-walled carbon nanotube having a BET specific surface area greater than or equal to 300 m²/g.

### Configuration 9:

The secondary battery according to any one of configurations 1 to 8, in which the multi-walled carbon nanotube includes a multi-walled carbon nanotube having a BET specific surface area greater than or equal to 200 m²/g.

### Configuration 10:

The secondary battery according to any one of configurations 1 to 9, in which the multi-walled carbon nanotube contains no metal catalyst.

### Configuration 11:

The secondary battery according to any one of configurations 1 to 10, in which electrode plate lengths of the positive electrode and the negative electrode are each greater than or equal to 3000 mm.

### REFERENCE SIGNS LIST

- 10: Secondary battery
- 11: Positive electrode
- 12: Negative electrode
- 13: Separator
- 14: Electrode assembly
- 15: Outer can
- 16: Sealing assembly
- 17: Negative electrode current collector plate
- 18: Positive electrode current collector plate
- 19: Insulating plate
- 20: Connection lead
- 21: Groove portion
- 22: Filter
- 23: Lower vent member
- 24: Insulating member
- 25: Upper vent member
- 26: Cap
- 26a: Through hole
- 27: Gasket
- 30: Positive electrode core
- 32: Positive electrode mixture layer
- 34: Positive electrode core exposed portion
- 40: Negative electrode core
- 42: Negative electrode mixture layer
- 44: Negative electrode core exposed portion

## Claims

1. A secondary battery comprising an electrode assembly in which a positive electrode and a negative electrode are wound with a separator interposed therebetween, a negative electrode current collector plate electrically connected to the negative electrode, and an electrolytic solution, wherein
the negative electrode has a strip-shaped negative electrode core and a negative electrode mixture layer disposed on the negative electrode core,
one end of the electrode assembly in a winding axis direction in the negative electrode core is provided with a negative electrode core exposed portion in which the negative electrode mixture layer is not disposed, and the negative electrode core exposed portion is joined to the negative electrode current collector plate,
the positive electrode has a strip-shaped positive electrode core and a positive electrode mixture layer disposed on the positive electrode core, and
the positive electrode mixture layer contains a positive electrode active material and a carbon nanotube, and the carbon nanotube includes at least one of a single-walled carbon nanotube and a multi-walled carbon nanotube.

2. A secondary battery comprising an electrode assembly in which a positive electrode and a negative electrode are wound with a separator interposed therebetween, a positive electrode current collector plate electrically connected to the positive electrode, and an electrolytic solution, wherein
the positive electrode has a strip-shaped positive electrode core and a positive electrode mixture layer disposed on the positive electrode core,
one end of the electrode assembly in a winding axis direction in the positive electrode core is provided with a positive electrode core exposed portion in which the positive electrode mixture layer is not disposed, and the positive electrode core exposed portion is joined to the positive electrode current collector plate, and
the positive electrode mixture layer contains a positive electrode active material and a carbon nanotube, and the carbon nanotube includes at least one of a single-walled carbon nanotube and a multi-walled carbon nanotube.

3. A secondary battery comprising an electrode assembly in which a positive electrode and a negative electrode are wound with a separator interposed therebetween, a negative electrode current collector plate electrically connected to the negative electrode, a positive electrode current collector plate electrically connected to the positive electrode, and an electrolytic solution, wherein
the positive electrode has a strip-shaped positive electrode core and a positive electrode mixture layer disposed on the positive electrode core,
one end of the electrode assembly in a winding axis direction in the positive electrode core is provided with a positive electrode core exposed portion in which the positive electrode mixture layer is not disposed, and the positive electrode core exposed portion is joined to the positive electrode current collector plate,
the negative electrode has a strip-shaped negative electrode core and a negative electrode mixture layer disposed on the negative electrode core,
the other end of the electrode assembly in a winding axis direction in the negative electrode core is provided with a negative electrode core exposed portion in which the negative electrode mixture layer is not disposed, and the negative electrode core exposed portion is joined to the negative electrode current collector plate, and
the positive electrode mixture layer contains a positive electrode active material and a carbon nanotube, and the carbon nanotube includes at least one of a single-walled carbon nanotube and a multi-walled carbon nanotube.

4. The secondary battery according to any one of claims 1 to 3, wherein the carbon nanotube includes a single-walled carbon nanotube and a multi-walled carbon nanotube.

5. The secondary battery according to any one of claims 1 to 3, wherein a content of the single-walled carbon nanotube is greater than or equal to 0.0001 parts by mass and less than or equal to 0.02 parts by mass with respect to 100 parts by mass of the positive electrode active material.

6. The secondary battery according to any one of claims 1 to 3, wherein a content of the multi-walled carbon nanotube is greater than or equal to 0.01 parts by mass and less than or equal to 0.5 parts by mass with respect to 100 parts by mass of the positive electrode active material.

7. The secondary battery according to any one of claims 1 to 3, wherein the positive electrode mixture layer contains at least one of a hydrogenated nitrile-butadiene copolymer (HNBR) and a cellulose derivative.

8. The secondary battery according to any one of claims 1 to 3, wherein the single-walled carbon nanotube includes a single-walled carbon nanotube having a BET specific surface area greater than or equal to 300 m²/g.

9. The secondary battery according to any one of claims 1 to 3, wherein the multi-walled carbon nanotube includes a multi-walled carbon nanotube having a BET specific surface area greater than or equal to 200 m²/g.

10. The secondary battery according to any one of claims 1 to 3, wherein the multi-walled carbon nanotube substantially contains no metal catalyst therein.

11. The secondary battery according to any one of claims 1 to 3, wherein electrode plate lengths of the positive electrode and the negative electrode are each greater than or equal to 3000 mm.
